Europäisches Patentamt

European Patent Office

Office européen des brevets

(11) Veröffentlichungsnummer : **0 014 233**
**B1**

(12) **EUROPÄISCHE PATENTSCHRIFT**

(45) Veröffentlichungstag der Patentschrift :
21.10.81

(51) Int. Cl.³ : **B 65 H 29/66**

(21) Anmeldenummer : **79104379.7**

(22) Anmeldetag : **08.11.79**

(54) Vorrichtung zum Fördern von Bogen an Druckmaschinen.

(30) Priorität : 31.01.79 DE 2903596

(43) Veröffentlichungstag der Anmeldung :
20.08.80 (Patentblatt 80/17)

(45) Bekanntmachung des Hinweises auf die Patenterteilung : 21.10.81 Patentblatt 81/42

(84) Benannte Vertragsstaaten :
BE CH DE FR GB IT NL SE

(56) Entgegenhaltungen :
DE - A - 2 114 865
US - A - 4 040 617

(73) Patentinhaber : **HEIDELBERGER DRUCKMASCHINEN
AKTIENGESELLSCHAFT**
Alte Eppelheimer Strasse 15-21
D-6900 Heidelberg (DE)

(72) Erfinder : **Breunig, Anton**
Fasanenweg 3
D-6903 Dilsberg (DE)

(74) Vertreter : Stoltenberg, Baldo H.H.
Alte Eppelheimer Strasse 15-21
D-6900 Heidelberg (DE)

Imprimerie Jouve, 17, rue du Louvre, 75001 Paris, France

Vorrichtung zum Fördern von Bogen an Druckmaschinen

Die Erfindung betrifft eine Vorrichtung zum Fördern von Bogen an Druckmaschinen mit einer im Takt der Bogenfolge angetriebenen Abweiserwelle, die mit ihren Nocken das Bogenende zur Schuppenbildung nach unten ablenkt.

Eine bekannte Vorrichtung dieser Art (DE-C-23 48 320) verwendet zum Transport der im Querschneider geschnittenen Bogen Saugwalzen. Zur Schuppenbildung werden die Enden der Bogen von Nokken aus der Förderebene nach unten abgelenkt, die im Gleichtakt mit der Saugfördereinrichtung angetrieben sind. Die Schuppenbildung der abzulegenden Bogen ist deshalb erforderlich, damit die Geschwindigkeit derselben unmittelbar vor dem Ablegen reduziert werden kann, um eine sichere und gleichmäßige Ablage zu gewährleisten.

Es hat sich gezeigt, daß die taktmäßig geförderten Bogen gegenüber ihren Transportmitteln einen Schlupf aufweisen, der je nach verwendeter Papiersorte, Oberfläche des Papiers, Gewicht des zu transportierenden Bogens, je nach Saugleistung und Oberflächenbeschaffenheit der Transportmittel usw. unterschiedliche Werte aufweist. Nachdem der Abstand zwischen den einzelnen Bogen möglichst gering gehalten wird, um die Bogen nicht unnötig zu beschleunigen, kann der unterschiedliche Schlupf zu Störungen im Bogentransport führen. Wird z.B. bedingt durch größeren Schlupf das Bogenende des vorlaufenden Bogens nicht vollständig abgelenkt und der nachlaufende Bogen trifft auf das Bogenende auf, so ist eine Schuppenbildung unmöglich und die Druckbogen werden zerstört.

Zu diesem Zweck ist es aus der US-A-4 040 617 bekannt, eine Vorrichtung zum Fördern von Bogen mit einer Abweiserwelle zu versehen, die im Takt der Bogenfolge angetrieben ist und deren Nocken das Bogenende zur Schuppenbildung nach unten ablenkt, wobei ein Riementrieb über Stellglieder derart verstellbar ist, daß der Zeitpunkt der Bewegung der Nocken gegenüber den Bogenende verändert wird. Die bekannte Ausführung ist in ihrem Aufbau kompliziert und erfordert für den Riemenantrieb ein Übersetzungs-Stellgetriebe, das durch die Vielzahl der Übertragungsglieder Schlupf aufweist, so daß die Einstellung der Phasenlage erschwert ist.

Die Aufgabe der Erfindung ist es, eine besonders einfache und kostengünstige Vorrichtung zur Phasenverschiebung der die Nocken tragenden Abweiserwelle gegenüber dem Takt der zugeführten Bogen zu erreichen, die im Stillstand und während des Laufens der Maschine betätigt werden kann.

Gemäß der Erfindung gelingt dies dadurch, daß als Stellglied zwischen dem treibenden und dem getriebenen Riementrum des Riementriebs der Abweiserwelle ein um eine ortsfeste und zur Abweiserwelle parallele Achse schwenkbarer Doppelhebel angeordnet ist, an dessen beiden Hebelarmen Laufrollen befestigt sind, von denen die eine Laufrolle gegen den treibenden Riementrum und die andere Laufrolle gegen den getriebenen Riementrum andrückt und die beiden Riementrums auslenken und daß zum Betätigen des Doppelhebels an einem Hebelarm eine Stellspindel angreift.

Hiermit wird bei Verwendung von ganz einfachen Mitteln eine Phasenverstellung der Abweiserwelle gegenüber den zugeführten Bogen erreicht, wobei die Verstellung im Stillstand und während des Laufs der Maschine durchgeführt werden kann. Auch ermöglicht die Lösung einen starren Antrieb in beiden Drehrichtungen, der beim Abbremsen der Maschine zu keiner Verstellung der Abweiserwelle führt. Die Abweiserwelle kann nicht nachfedern, so daß eine Veränderung der Phasenlage der Nocken gegenüber den Bogen nicht auftreten kann. Außerdem erzeugt der Doppelhebel bei der Verstellung einen doppelten ungefederten Verstellweg des Nokkens gegenüber dem Bogenende.

Ein Ausführungsbeispiel der Erfindung ist in der Zeichnung schematisch dargestellt. Es zeigt:

Fig. 1 eine Seitenansicht des Querschneiders,

Fig. 2 eine Seitenansicht der Verstelleinrichtung.

Dem Rotationsquerschneider 1 wird in bekannter Weise Bahnmaterial 2 zugeführt, das zwischen einem feststehenden Messer 3 und einem umlaufenden Messer 4 in Bogen von bestimmtem Format geschnitten wird. Die Bogen 5, 6 werden über Transportbänder 7, 8, 9 dem Ablegestapel 10 zugeführt. Hierbei bewegen sich die Transportbänder 7 und 9 mit einer geringfügig höheren Geschwindigkeit als die zugeführte Papierbahn und das Transportband 8 mit einer gegenüber der Papierbahn wesentlich verminderten Geschwindigkeit, um eine verlangsamte, schuppenförmige Ablage der Bogen zu ermöglichen.

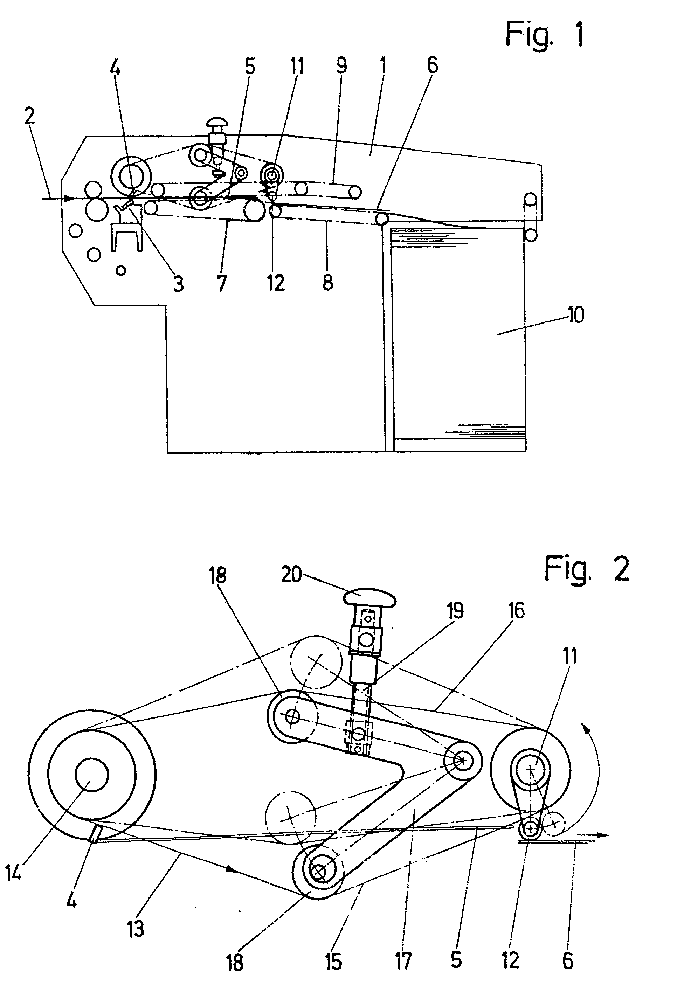

Um das Ende des Bogens 6 sicher aus seiner Bewegungsbahn auszulenken, ist über dem Transportband 8 eine Abweiserwelle 11 vorgesehen, die im Takte der Bogenfolge angetrieben ist und mit ihren Nocken 12 das Bogenende nach unten drückt (Fig. 1).

Wie aus Figur 2 ersichtlich, wird die Abweiserwelle über einen Riementrieb 13 von der Querschneiderwelle 14 angetrieben, die das Messer 4 trägt. Zwischen dem treibenden Riementrum 15 und dem getriebenen Riementrum 16 ist ein schwenkbarer Doppelhebel 17 angeordnet, an dessen beiden Hebelarmen Laufrollen 18 befestigt sind, von denen eine zum Spannen des Riementriebs 13 exzentrisch gelagert ist. Über die beiden Laufrollen 18 werden die beiden Riementrums 15, 16 ausgelenkt, so daß beim Verstellen des Doppelhebels 17 eine Phasenverstellung der Abweiserwelle 11 gegenüber der Querschneiderwelle 14, bzw. gegenüber dem Bogen 5, erfolgt. Zur Verstellung ist eine Stellspindel 19 vorgesehen, die über das Handrad 20 feinfühlig verdreht werden kann.

Über den Doppelhebel 17 läßt sich somit der Zeitpunkt der Nockenbewegung gegenüber der Bogenfolge verändern, so daß der Nocken 12 immer genau das Ende des vorauslaufenden Bogens 6 nach unten drückt. Der nächstfolgende Bogen 5 kann somit schuppenförmig über den vorauslaufenden Bogen 6 gleiten, wobei sich die Abweiserwelle 11 entgegen dem Uhrzeigersinn dreht.

Bei dem zum Antrieb verwendeten Riementrieb 13 kann es sich vorteilhaft um einen Zahnriemen handeln; in gleicher Weise lassen sich auch andere Antriebsmittel wie z.B. Rollenketten oder dergl. verwenden.

**Ansprüche**

1. Vorrichtung zum Fördern von Bogen an Druckmaschinen mit einer im Takt der Bogenfolge angetriebenen Abweiserwelle, die mit ihren Nocken das Bogenende zur Schuppenbildung nach unten ablenkt, wobei ein Riementrieb (13) für die Abweiserwelle (11) vorgesehen ist, der über Stellglieder (17, 18) derart verstellbar ist, daß der Zeitpunkt der Nockenbewegung gegenüber der Bogenfolge verändert wird, dadurch gekennzeichnet, daß als Stellglied zwischen dem treibenden und getriebenen Riementrum (15, 16) des Riementriebs (13) der Abweiserwelle (11) ein um eine ortsfeste und zur Abweiserwelle parallele Achse schwenkbarer Doppelhebel (17) angeordnet ist, an dessen beiden Hebelarmen Laufrollen (18) befestigt sind, von denen die eine Laufrolle gegen den treibenden Riementrum (15) und die andere Laufrolle gegen den getriebenen Riementrum (16) andrückt und die beide Riementrums (15, 16) auslenken, und daß zum Betätigen des Doppelhebels an einem Hebelarm eine Stellspindel (19) angreift.

2. Vorrichtung nach Anspruch 1, dadurch gekennzeichnet, daß die Abweiserwelle (11) über einen Zahnriemen von der Querschneiderwelle (14) angetrieben wird.

**Claims**

1. An apparatus for transporting sheets on printing presses with a tearing-up shaft, kept moving in step with the train of sheets, and guiding, by way of its cams, the sheet ends downwards for causing overlapping, the apparatus having a belt driving system (13) for the tearing-up shaft (11), the system being able to undergo adjustment by way of adjustment parts (17, 18) for changing the timing of the cams in relation to the train of sheets, characterized in that one adjustment part, taking effect between the driving and return belt runs (15, 16) of the belt driving system (13) of the tearing-off shaft (11) is a two-armed lever (17) able to be turned about a fixed axis parallel to the tearing-off shaft, and whose two arms have roller guides, one such roller guide acting against the driving belt run (15) and the other acting against the return belt run (16) for guiding the two belt runs (15, 16) and in that there is an adjustment threaded rod (19) for moving the lever by acting on one lever arm.

2. An apparatus as claimed in claim 1, characterized by a toothed belt for driving the tearing-off shaft (11) from the cross-cutting shaft (14).

**Revendications**

1. Dispositif destiné à amener des feuilles à une machine à imprimer, avec un arbre de butée entraîné en synchronisme avec la série des feuilles et qui, avec ses cames, dévie vers le bas les extrémités des feuilles pour leur empilage, dans lequel un entraînement à courroie (13) pour l'arbre de butée (11) est prévu, réglable au moyen d'un organe de réglage (17, 18) de manière que l'instant de mouvement des cames par rapport à la série des feuilles puisse être modifié, dispositif caractérisé en ce que l'organe de réglage consiste en un levier double (17) pouvant pivoter autour d'un axe fixe parallèle à l'arbre de butée, disposé entre le brin tendu et le brin libre (15, 16) de la courroie d'entraînement (13) de l'arbre de butée (11), et sur les deux bras duquel sont montés des galets (18) dont l'un s'appuie contre le brin de courroie tendu (15) et dont l'autre s'appuie contre le brin de courroie libre (16), en déviant ainsi les deux brins de courroie (15, 16), une broche de réglage (19) étant accouplée avec un bras du levier double pour l'actionner.

2. Dispositif selon la revendication 1, caractérisé en ce que l'arbre de butée (11) est entraîné à partir de l'arbre de coupe (14) au moyen d'une courroie crantée.

Fig. 1

Fig. 2